# EUROPEAN PATENT APPLICATION

(11) **EP 3 285 523 A1**
(43) Date of publication of application: **21.02.2018**
(21) Application number: 16184303.2
(22) Date of filing: 16.08.2016
(51) Int. Cl.: H04W 52/02, H04L 29/08, H04L 12/28

(54) **METHOD, NETWORK, DEVICE AND COMPUTER PROGRAM PRODUCT FOR OPTIMIZING DUTY CYCLES OF PAIRED DEVICES IN BUILDING AUTOMATION**

(71) Applicant: ABB AB, 721 78 Västerås (SE)
(72) Inventor: BAG, Gargi, 723 44 Västerås (SE); PANG, Zhibo, 722 42 Västerås (SE); JOHANSSON, Morgan, 722 44 Västerås (SE); SCHMITT, Johannes, 68526 Ladenburg (DE)
(74) Representative: ABB AB

(57) **Abstract**

The present disclosure relates to a method performed in a Building Automation (BA) network 1 for adjusting a duty cycle of a second wireless End Node (EN) 2b paired with a first wireless EN 2a in the BA network. The method comprises the first EN sending a polling message to the second EN, the polling message comprising information about a polling time interval. The method also comprises the second EN receiving the polling message from the first EN. The method also comprises the second EN adjusting its duty cycle based on the received time interval.

## Description

### TECHNICAL FIELD

The present disclosure relates to a method and devices for setting duty/sleep cycles of paired wireless devices in a Building Automation (BA) network.

### BACKGROUND

Building/home automation (BA/HA) devices are intended to improve energy efficiency, provide comfort and security to the residents. Emerging wireless Internet of Things (IoT) standards such as Internet Engineering Task Force (IETF) IoT and Thread are considered to play a major role in next generation BA devices. Wireless technologies have advantages over the wired counterpart in terms of ease and cost of installation and retrofit. However, wireless technologies are more prone to reliability and latency issues.

In these wireless technologies, the wireless End Node (EN) which requires low power consumption receives packets in a manner of "polling", i.e. the EN maintains a duty cycle whereby it wakes up during an interval of time and polls for data packets or sends data packets from/to a parent node to save energy. Generally the sender and the receiver, which can both be ENs, do not take into account the duty cycle of the other EN, and they are not aware how often the other node wakes up to receive or send packets.

The ENs may maintain different duty cycles and different wake up intervals which can increase latency in the ongoing communication as the packets will be held at the parent node until the correspondent EN wakes up to receive it. For example in the Thread protocol, the interval of polling of ENs is 3 seconds by default, so the message can only be received by the destination EN 3 seconds later if the message arrives at its parent router after the destination EN goes to sleep. In many practical cases, 3 seconds is too long for sufficient responsiveness. Also, currently, the EN has to periodically wake up and perform polling to receive data packets, consuming power, even though the correspondent EN may not send data in same frequency.

An example of paired wireless devices in BA are a lighting device (lamp) and a corresponding switching device for turning the lamp on or off.

### SUMMARY

It is an objective of the present invention to provide an improved way of setting the duty cycle of a wireless end node in a BA network.

According to an aspect of the present invention, there is provided a method performed in a BA network for adjusting a duty cycle of a second wireless EN paired with a first wireless EN in the BA network. The method comprises the first EN sending a polling message to (or, more generally, towards, e.g. to a parent node of) the second EN, the polling message comprising information about a polling time interval. The method also comprises the second EN receiving the information about the polling time interval (e.g. from its parent node and/or in the polling message from the first EN). The method also comprises the second EN adjusting its duty cycle based on the received time interval.

According to another aspect of the present invention, there is provided a method performed by a first wireless EN paired with a second wireless EN in a BA network. The method comprises sending a polling message towards the second EN, the polling message comprising information about a polling time interval. In some embodiments, the method also comprises choosing the duty cycle of the first EN based on whether it has received an acknowledgement message from the second EN. In some embodiments, the polling time interval is the polling time interval currently used by the first EN.

According to another aspect of the present invention, there is provided a method performed by a second wireless EN paired with a first wireless EN in a BA network. The method comprises receiving information about a polling time interval from the first EN. The method also comprises adjusting the duty cycle of the second EN based on the received polling time interval. In some embodiments, the method also comprises, before and/or after the adjusting of its duty cycle, sending an acknowledgement message to the first EN in response to the receiving of the polling message. In some embodiments, the duty cycle is adjusted to conformity with the received polling time interval.

According to another aspect of the present invention, there is provided a computer program product comprising computer-executable components for causing a BA network to perform an embodiment of a method of the present disclosure when the computer-executable components are run on processor circuitry comprised in the BA network.

According to another aspect of the present invention, there is provided a BA network configured for adjusting a duty cycle of a second wireless EN paired with a first wireless EN in the BA network. The BA network comprises processor circuitry, and storage storing instructions executable by said processor circuitry whereby said BA network is operative to send a polling message from the first EN towards the second EN, the polling message comprising information about a polling time interval. The BA network is also operative to receive the information about the polling time interval at the second EN. The BA network is also operative to adjust the duty cycle of the second EN based on the received time interval.

According to another aspect of the present invention, there is provided a first wireless EN configured for being paired with a second wireless EN in a BA network. The first wireless EN comprises processor circuitry, and storage storing instructions executable by said processor circuitry whereby said first wireless EN is operative to send a polling message to the second wireless EN, the polling message comprising information about a polling time interval (5).

According to another aspect of the present invention, there is provided a second wireless EN configured for being paired with a first wireless EN in a BA network. The second wireless EN comprises processor circuitry, and storage storing instructions executable by said processor circuitry whereby said second wireless EN is operative to receive a polling message from the first wireless EN, the polling message comprising information about a polling time interval. The second EN is also operative to adjust its duty cycle based on the received polling time interval.

In accordance with the present invention, the first EN sends information about a polling time interval (i.e. at which periodicity an EN may wake up from sleep to perform polling) to the second EN. The polling time interval may typically be the same interval (periodicity) currently used by the first EN. The second EN may then, based on this received information, adjust its own duty cycle in view of the received polling time interval information, typically to the same polling time interval as the first EN. By means of this adjusting, the polling time interval (the polling periodicity) used in the two paired ENs may be adjusted in view of each other. Thus, latency in communication between the two ENs may be reduced, and/or unnecessary polling may be avoided or reduced. Further, the invention does not require time/clock synching between the paired ENs since only an interval is used and not specified time points, and the ENs do not have to be awake (polling) simultaneously.

The first and second ENs may be any wireless radio devices able to communicate with each other automatically (i.e. without manual operation) and may e.g. be regarded as Machine-to-Machine (M2M) devices. The information may be sent directly between the ENs, Device-to-Device (D2D) communication, but may typically be sent via at least one parent node acting as a router, since direct D2D communication requires the two ENs to be awake at the same time.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic block diagram of an embodiment of a BA network, in accordance with the present invention.
Fig 2 is a schematic block diagram of an embodiment of a wireless end node, in accordance with the present invention.
Fig 3 is a schematic diagram of embodiments of respective duty cycles of two end nodes which are paired with each other.
Fig 4 is a schematic flow chart of embodiments of a method performed in a wireless end node, in accordance with the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

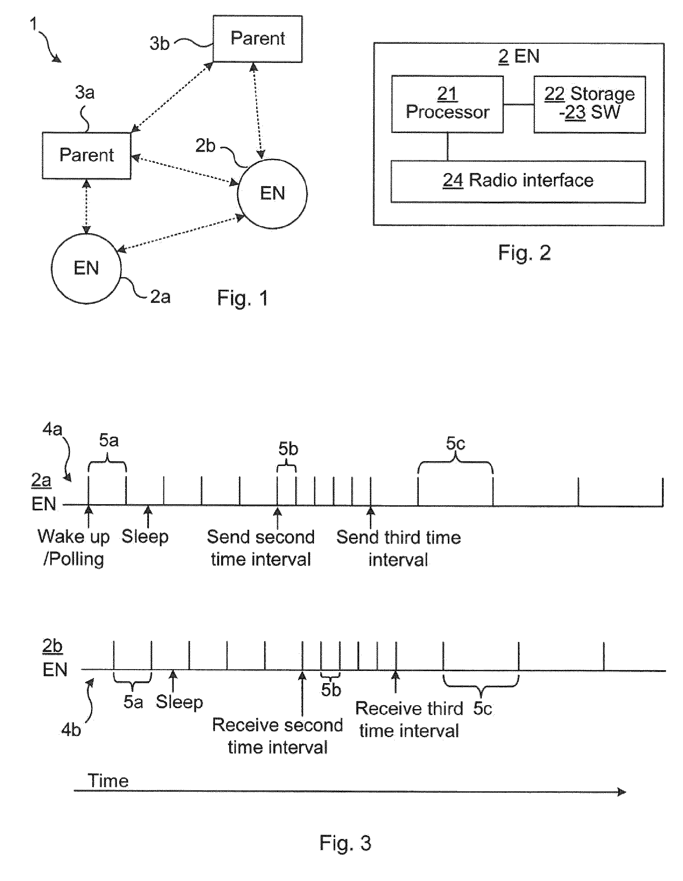

Figure 1 illustrate communication connections between different nodes in a BA network 1. The BA network comprises a plurality of wireless devices 2 (herein also called end nodes, ENs), each connected to at least one of one or a plurality of parent nodes 3 of the BA network. Each of the wireless devices has been installed, commissioned and knows which other device(s) it is supposed to communicate with (pairing). An analogy to this is that a switch EN knows which lamp ENs it is to communicate with. Each of the wireless devices 2 may be any wireless device suitable for the BA network 1, typically a terminal or end node, implying that it is not configured for forwarding signalling between other nodes. Each of the parent nodes 3, on the other hand, is configured for forwarding signalling between other nodes and are e.g. in the form of a router or switch or the like. In the example of the figure, a first wireless device 2a is connected to a first parent node 3a in the BA network. Similarly, a second wireless device 2b may be connected to a second parent node 3b in the BA network, or to the first parent node 3a (whereby the two ENs are connected to the same parent node, and/or (possibly, but less commonly) directly to the first EN 2a, as indicated by the different dotted arrows in the figure. Thus, messages sent between the first and second ENs 2 are typically routed via at least the first parent node 3a, and possibly also via at least the second parent node 3b. This implies that the messages may be routed via any number of parent nodes 3 as needed, e.g. dependent on the distance between the first and second ENs.

A router/parent node 3 may be a device to which a wireless device 2, e.g. an end node, attaches when joining a wireless network such as the BA network 1. It may also be responsible for forwarding the end node's signalling packets to their destination (typically another wireless device 2). The parent node communicates with the wireless device(s) over a wireless/radio interface, and may communicate with other parent nodes/routers 3 via a wired or wireless communication interface.

A wireless device or end node 2 may be a low power device that just sends the signalling packets to its parent node 3 to send them to the intended destination (typically other wireless device 2). It may not participate in forwarding between other nodes/devices. Typical examples include BA devices such as switches, actuators, sensors etc.

In accordance with the present invention, the first and second wireless devices 2 are paired with each other and are able to communicate with each other via a communication path in the BA network 1. As an example, the first wireless device 2a is a power switch associated with the second wireless device 2b which is a lamp. When a user wants to turn the lamp 2b on or off, he/she may thus manipulate the switching device 2a, whereby a signal is sent between the first and second wireless devices over the communication path there between.

In accordance with the present invention, polling time interval information is sent from the first EN 2a towards the second EN 2b. This information is sent in a polling message. The polling message may be addressed to the second EN, why the message may be only passively relayed by the one or more parent nodes 3 in the communication path between the first and second ENs. Additionally or alternatively, the first EN may address the polling message to a parent node, which knows which other EN(s) the first EN is paired with and forwards the polling time interval information in a polling message addressed to said other EN(s) (herein the second EN 2b), whereby the parent node may instruct/order the EN(s) to use the polling time interval of the polling message.

Figure 2 is a schematic block diagram of an embodiment of a wireless device (herein called an EN) 2, in accordance with the present invention. The EN 2 comprises processor circuitry 21 e.g. a central processing unit (CPU). The processor circuitry 21 may comprise one or a plurality of processing units in the form of microprocessor(s). However, other suitable devices with computing capabilities could be comprised in the processor circuitry 21, e.g. an application specific integrated circuit (ASIC), a field programmable gate array (FPGA) or a complex programmable logic device (CPLD). The processor circuitry 21 is configured to run one or several computer program(s) or software (SW) 23 stored in a storage 22 of one or several storage unit(s) e.g. a memory. The storage unit is regarded as a computer readable means of a computer program product and may e.g. be in the form of a Random Access Memory (RAM), a Flash memory or other solid state memory, or a hard disk, or be a combination thereof. The processor circuitry 21 may also be configured to store data in the storage 22, as needed. The EN 2 also comprises a radio/wireless interface 24 for wireless communication with other node(s) in the BA network 1 such as parent node(s) 3 and/or other EN(s) 2.

Figure 3 illustrates the duty cycles 4 over time of two paired ENs 2. The two paired ENs may maintain two different duty cycles which may not overlap (implying that direct D2D communication is not possible, but data packets need to be held in a parent node 3). At first in time (to the left in the figure), both the first EN 2a, with its duty cycle 4a, and the second EN 2b, with its duty cycle 4b, uses a first polling time interval 5a. In the figure, polling times (when the EN is awake) are indicated with the vertical lines, in between which the EN is asleep and not able to send or receive data packets.

Then, the first EN 2a changes its polling time interval to a shorter second polling time interval 5b, whereby the polling frequency is increased, possibly due to the communication between the first and second ENs now being more sensitive to latency. In connection with changing its polling time interval, the first EN sends a polling message comprising information about the second polling time interval to/towards the second EN 2b. The second EN 2b then receives the information and in response thereto adjusts its polling time interval to conformity with the second polling time interval 5b, whereby both ENs again use the same polling time interval 5b. Similarly, when communication is less sensitive to latency, the first EN may change its polling time interval to a longer third polling time interval 5c (reducing power consumption) and sends another polling message to/towards the second EN 2b, which adjusts its polling time interval accordingly.

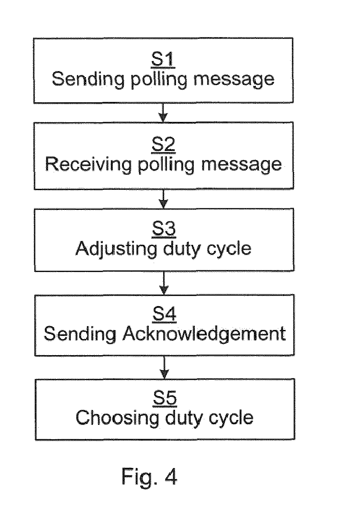

Figure 4 illustrates different embodiments of the methods performed in the BA network 1, e.g. by an EN 2, a parent 3, a combination thereof and/or by other nodes in the BA network, in accordance with the present disclosure.

The first EN 2a sends S1 a polling message towards the second EN 2b, the polling message comprising information about a polling time interval 5. That the polling message is sent towards the second EN implies that it is sent addressed to the second EN or to a parent node in the BA system which is part of the communication path between the first and second ENs, e.g. the parent node of the first EN and/or the parent node of the second EN. Then, the second EN 2b receives S2 the polling message or the polling time interval information therein from the first EN 2a, typically via at least one parent node which may only relay the message from the first EN or which repacks the information in a new message to the second EN. As discussed herein, the message may be sent addressed to the second EN 2b directly or to a parent node 3 which then forwards the information. The information may be sent via any number of parent nodes 3. The message/information may be held by a parent node to which the second EN 2b is connected until the second EN wakes up to perform polling and is able to receive S2 the information.

After having received S2 the information about the polling time interval 5, the second EN 2b adjusts S3 its duty cycle 4b based on the received S2 time interval 5. Typically, but not necessarily, the second EN adjusts S3 its duty cycle to use the same polling time interval 5 as that about which information was received S2.

In some embodiments of the present invention, the second EN 2b may, before and/or after the adjusting S3 of its duty cycle 4b, send S4 an acknowledgement message to/towards the first EN 2a in response to the receiving S2 of the polling message. The acknowledgement message may thus confirm to the first EN that the second EN has received the polling time interval information, and may optionally also confirm that the second EN has, or will, adjust its duty cycle accordingly.

In some embodiments of the present invention, the first EN 2a may, based on whether it has received an acknowledgement message from the second EN 2b, choosing S5 its duty cycle 4a. Thus, the first EN may e.g. choose not change its own duty cycle to use a new polling time interval, or choose to change back to using an old polling time interval (if it has already changed its duty cycle), if it has not received an acknowledgement from the second EN.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method performed in a Building Automation, BA, network (1) for adjusting a duty cycle (4b) of a second wireless End Node, EN, (2b) paired with a first wireless EN (2a) in the BA network, the method comprising:
the first EN (2a) sending (S1) a polling message towards the second EN (2b), the polling message comprising information about a polling time interval (5);
the second EN (2b) receiving (S2) the information about the polling time interval (5); and
the second EN (2b) adjusting (S3) its duty cycle (4b) based on the received (S2) time interval (5).

2. A method performed by a first wireless End Node, EN, (2a) paired with a second wireless EN (2b) in a Building Automation, BA, network (1), the method comprising:
sending (S1) a polling message towards the second EN (2b), the polling message comprising information about a polling time interval (5).

3. The method of claim 2, further comprising:
choosing (S5) its duty cycle (4a) based on whether it has received an acknowledgement message from the second EN (2b).

4. The method of any preceding claim, wherein the polling time interval (5) is the polling time interval currently used by the first EN (2a).

5. A method performed by a second wireless End Node, EN, (2b) paired with a first wireless EN (2a) in a Building Automation, BA, network (1), the method comprising:
receiving (S2) information about a polling time interval (5) from the first EN (2a);
adjusting (S3) its duty cycle (4b) based on the received (S2) polling time interval (5).

6. The method of claim 5, further comprising:
before and/or after the adjusting (S3) of its duty cycle (4b), sending (S4) an acknowledgement message to the first EN (2a) in response to the receiving (S2) of the polling message.

7. The method of claim 5 or 6, wherein the duty cycle (4b) is adjusted (S3) to conformity with the received (S2) polling time interval (5).

8. A computer program product (22) comprising computer-executable components (23) for causing a BA network (1) to perform the method of any one of claims 1-7 when the computer-executable components are run on processor circuitry (21) comprised in the BA network.

9. A Building Automation, BA, network (1) configured for adjusting a duty cycle (4b) of a second wireless End Node, EN, (2b) paired with a first wireless EN (2a) in the BA network, the BA network comprising:
processor circuitry (21); and
storage (22) storing instructions (23) executable by said processor circuitry whereby said BA network is operative to:
send a polling message from the first EN (2a) towards the second EN (2b), the polling message comprising information about a polling time interval (5);
receive the information about the polling time interval (5) at the second EN (2b); and
adjust the duty cycle (4b) of the second EN (2b) based on the received time interval (5).

10. A first wireless End Node, EN, (2a) configured for being paired with a second wireless EN (2b) in a Building Automation, BA, network (1), the first wireless EN comprising:
processor circuitry (21); and
storage (22) storing instructions (23) executable by said processor circuitry whereby said first wireless EN is operative to:
send a polling message to the second wireless EN (2b), the polling message comprising information about a polling time interval (5).

11. A second wireless End Node, EN, (2b) configured for being paired with a first wireless EN (2a) in a Building Automation, BA, network (1), the second wireless EN comprising:
processor circuitry (21); and
storage (22) storing instructions (23) executable by said processor circuitry whereby said second wireless EN is operative to:
receive a polling message from the first wireless EN (2a), the polling message comprising information about a polling time interval (5); and
adjust its duty cycle (4b) based on the received polling time interval (5).
